# EUROPEAN PATENT SPECIFICATION

(11) **EP 0 598 452 B1**
(45) Date of publication and mention of the grant of the patent: **03.03.1999**
(21) Application number: 93203172.7
(22) Date of filing: 15.11.1993
(51) Int. Cl.: H04J 14/02

(54) **Multiple access telecommunication network**
Übertragungsnetz mit Vielfachzugriff
Réseau de transmission à accès multiple

(30) Priority: 19.11.1992 EP 92203569
(43) Date of publication of application: 25.05.1994
(73) Proprietor: Koninklijke Philips Electronics N.V., 5621 BA Eindhoven (NL)
(72) Inventor: Van Driel, Carel-Jan Leendert, NL-5656 AA Eindhoven (NL); Sinha, Atul Narendranath, NL-5656 AA Eindhoven (NL)
(74) Representative: Deguelle, Wilhelmus Hendrikus Gerardus

(56) References cited:
- DE-A- 2 623 527
- IEEE GLOBAL TELECOMMUNICATIONS CONFERENCE GLOBCOM '91, vol.3, 2 December 1991, PHOENIX pages 1817 - 1822 HIROYUKI OHTSUKA ET AL. '256-QAM subcarrier transmission for broadband distribution networks.'

## Description

The invention relates to a telecommunication network comprising a main station coupled to a plurality of sub-stations over a channel, said sub-stations comprising an auxiliary modulator for generating an auxiliary signal by modulation of an input signal on a subcarrier having a frequency that is different for at least two sub-stations, and a modulator for deriving a modulated transmit signal from the auxiliary signal.

The invention likewise relates to a sub-station to be used in a telecommunication network defined above.

A telecommunication network as defined in the opening paragraph is known from the journal article "Optical Interference in Subcarrier Multiplexed Systems with Multiple Optical Carriers" by C. Desem in IEEE Journal on Selected Areas in Communication, Vol. 8, No. 7, September 1990, pp. 1290-1295.

Such transmission systems are used for communication between a main station and a plurality of sub-stations over a channel used in common by the sub-stations. This channel may be formed, for example, by a glass fibre, a coaxial cable or a radio link. Applications of such transmission systems are, for example, passive optical networks, local area networks, satellite communication systems and mobile telephone systems.

In telecommunication networks utilizing a common channel for all the sub-stations it is to be ensured that no or only little mutual interference is caused by sub-stations simultaneously transmitting information to the main station.

Generally, this may be achieved by giving the signals to be transmitted by the sub-stations their own frequencies, so that at the main station, for example, by means of frequency selective filters, the signals coming from different sub-stations may be separated. Another option is making a different time slot in a frame available to each sub-station, so that only a single sub-station at a time transmits a signal to the main station.

A simple alternative to said methods is the telecommunication network known from said journal article, in which sub-stations are used which generate a transmit signal with a carrier frequency that may be about the same for the various sub-stations. This carrier frequency is, for example, amplitude (or intensity), frequency, or phase modulated by an auxiliary signal which itself is obtained by modulation of an input signal on a subcarrier which is different for the various sub-stations.

The receiver in the main station comprises a demodulator followed by separating means for separating the signals coming from the different sub-stations. These separating means may comprise, for example, band filters or synchronous detectors followed by low-pass filters.

Said journal article describes that interference may be expected from other sub-stations on the signal coming from a specific sub-station. This interference is caused by interference of different carriers having a substantially equal frequency in the receiver of the main station. The intensity of this interference depends, among other things, on the bandwidth of the auxiliary signal, the spectral bandwidth of the carrier, on differences of the carrier frequencies of different sub-stations and on the number of sub-stations. The interference increases with the number of sub-stations and decreases as the frequency difference between different carriers and the spectral bandwidth of the carrier increase.

In practice the maximum transfer rate of such prior-art communication network is restricted by this mutual interference caused by signals coming from different sub-stations.

It is an object of the invention to provide a telecommunication network as defined in the opening paragraph in which the mutual interference by sub-stations is reduced considerably. For this purpose, the invention is characterized in that the sub-stations comprise reducing means for reducing the mean amplitude of the transmit signal when the amplitude of the auxiliary signal is reduced.

Reducing the mean amplitude of the transmit signal if the auxiliary signal has a reduced amplitude has the effect of power reduction or, depending on the value of the reduction of the mean amplitude of the transmit signal, even the effect of disabling the transmit signal concerned. This achieves that the number of effective carriers available in the telecommunication network at a specific instant is reduced on average. Since the mutual interference depends on the squared number of carriers available in the system, the measures according to the invention result in a considerable reduction of the mutual interference.

A first situation in which the amplitude of the auxiliary signal is reduced occurs, for example, when the auxiliary modulator is an amplitude modulator in which the auxiliary signal is obtained by enabling and disabling the subcarrier in response to the source signal to be transmitted. If the subcarrier is disabled (for example, for 50% of the time), the (mean) amplitude of the carrier can be reduced.

A second situation in which the amplitude of the auxiliary signal is reduced is the case where the information transfer is effected in bursts. It is then advantageous to reduce the (mean) amplitude of the transmit signal in the absence of the auxiliary signal when no information transfer takes place.

It is conceivable that the subcarrier is not fully disabled, but that the amplitude of the subcarrier always retains a minimum value.

In the published German Patent Application No. 26 23 527 a distribution system is disclosed in which a plurality of signals are modulated on a subcarrier and added. The added signals are subsequently modulated on an optical carrier. The problems related to multiple access are not addressed in the above German Patent application.

An embodiment of the invention is characterized in that the sub-stations comprise coding means for converting the input signal into a coded signal which, compared with the input signal, is active for a shorter fraction of time.

By utilizing a coded signal which is active for a shorter fraction of time the power of the transmit signal can be reduced for a longer period of time, so that the number of effective sub-stations and thus the interference caused by them is reduced considerably. To keep the energy per bit at a constant level, the coded signal is to have an increased ratio of peak power to mean power.

A further embodiment of the invention is characterized in that the coded signal comprises a pulse position modulated signal.

Pulse-position modulation is a simple coding method by which the fraction of time in which the signal is active can be reduced. Other conceivable codes are, for example, codes in which the information is coded in the positions of a small number of pulses *in lieu of* the position of a single pulse.

The invention will be further explained with reference to the drawing Figures in which:
Fig. 1a shows a passive optical network in which the invention can be implemented;
Fig. 1b shows a telecommunication network for mobile communication in which the invention can be implemented;
Fig. 2 shows a sub-station to be used in a telecommunication network according to the invention;
Fig. 3 shows signal shapes that may occur in the sub-station as shown in Fig. 2;
Fig. 4 shows an alternative embodiment for a sub-station to be used in a telecommunication network according to the invention;
Fig. 5 shows coding means to be used in a telecommunication network according to the invention; and
Fig. 6 shows a main station to be used in the telecommunication network according to the invention.

The telecommunication network shown in Fig. 1a comprises a main station 1 connected to the sub-stations 2 to 11 over the channel in this case being a glass fibre network 12. At the junctions the light emitted by the main station 1 is split up for further distribution through the network to the sub-stations 2 to 11. Light signals emitted by the sub-stations are combined in the junctions to a combined light signal to be applied to the main station.

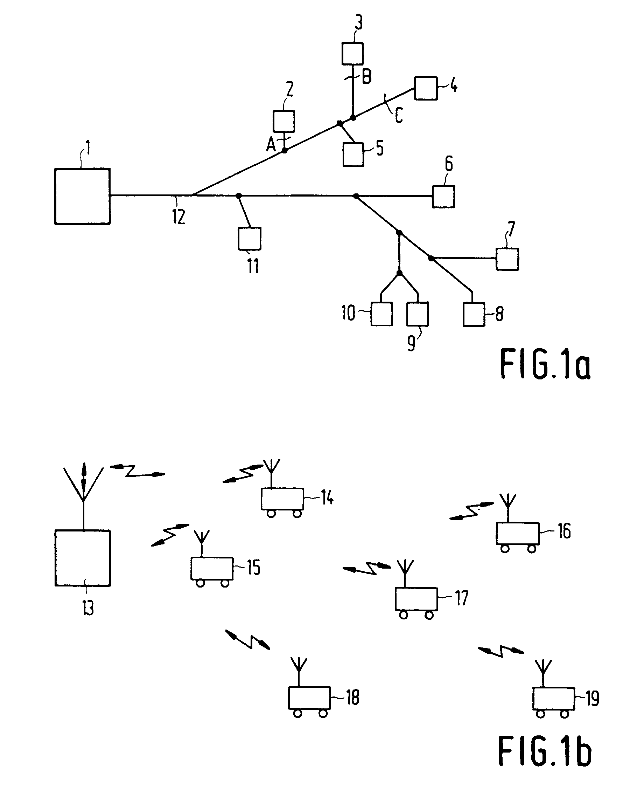

The telecommunication network shown in Fig. 1b comprises a main station 13 capable of exchanging information with a plurality of mobile sub-stations 14 to 19 over the channel which in this case is a radio link.

Since in both the network shown in Fig. 1a and the network shown in Fig. 1b all sub-stations use a channel in common, these networks need measures to avoid mutual interference by simultaneously transmitting sub-stations.

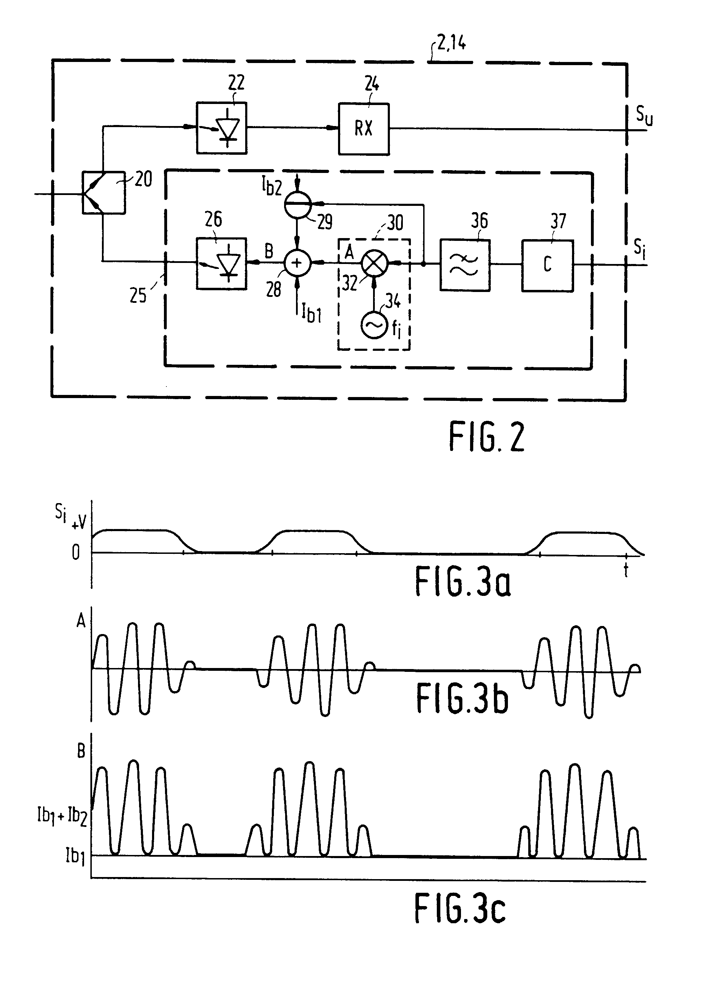

At the sub-station 2 shown in Fig. 2 the input signal Sᵢ is applied to a transmitter 25. In the transmitter 25 the input signal Sᵢ is applied to an input of a low-pass filter 36 *via* coding means 37. The output of the low-pass filter 36 is connected to an input of an auxiliary modulator 30. The auxiliary modulator 30 comprises an oscillator 34 for generating the subcarrier having a frequency fᵢ. The input of the auxiliary modulator 30 is connected to a first input of a multiplier circuit 32 and the output of the oscillator 34 is connected to a second input of the multiplier circuit 32. The output of the multiplier circuit 32, likewise forming the output of the auxiliary modulator 30, is connected to a first input of an adder circuit 28. A constant value I_{b1} is applied to a second input of the adder circuit 28 while a value I_{b2} from a controllable current source 29 is applied to a third input of the adder circuit. The controllable current source 29 is controlled in response to the output signal of the low-pass filter 36. The controllable current source 29 forms the reducing means for reducing the mean amplitude of the transmit signal according to the inventive idea. The output of the adder circuit 26 is connected to an input of a modulator in this case being an electrooptical converter 26. The output of the electrooptical converter 26, having the transmit signal for its output signal, is connected to a first input of an optical duplexer 20. An output of the optical duplexer 20 is connected to an optoelectrical converter 22 whose output is connected to the input of a receiver 24. An output signal Sᵤ is available at the output of the receiver 24.

In the exemplary embodiment shown in Fig. 2 it is assumed that the input signal Sᵢ comprises digital symbols whose binary "0" and "1" values respectively, are represented by voltages having the values 0 and +V. The output of the auxiliary modulator then carries an auxiliary signal formed by a subcarrier having a frequency fᵢ amplitude modulated by the coded and filtered input signal Sᵢ. The frequency of the subcarrier is generally different for different sub-stations. However, it is conceivable that a combination of TDMA (Time-Division Multiple Access) and SCMA (SubCarrier Multiple Access) is used where different sub-stations transmit in different time slots in a frame, so that it is possible to choose the same frequency of the subcarrier for a number of sub-stations. If the signal Sᵢ is active, an additional current I_{b2} is applied to the adder circuit 28 by the current source 29, so that a value I_{b1}+I_{b2} is added to the modulated carrier by the adder circuit 28. The value I_{b2} is selected to exceed or be equal to the amplitude of the modulated subcarrier, as a result of which the minimum value of the input signal of the electrooptical converter 26 is equal to I_{b1}. If the subcarrier is disabled by the signal Sᵢ (signal Sᵢ inactive), the current produced by the current source 29 is reduced and, according to the inventive idea, the input signal of the electrooptical converter 26 is reduced to the residual value I_{b1}. The low-pass filter 36 provides a limitation of the bandwidth of the output signal of the coder 37 so as to limit the bandwidth of the transmit signal. In the situation discussed here the input signal of the electrooptical converter is converted into intensity variations of the optical signal. The electrooptical converter 26 feeds the optical transmit signal to the channel through the duplexer 20. By reducing the signal B on the input of the electrooptical converter, the amplitude of the transmit signal is likewise reduced, so that the mutual interference of the sub-stations is reduced.

A signal received from the channel is applied to an optoelectrical converter 22 *via* the duplexer. The receiver 24 extracts the signal Sᵤ intended for its station from the output signal of the electrooptical converter 22. Since the channel is the same for all these stations, the signals intended for the different sub-stations are transmitted in a multiplex signal. This may be effected, for example, by time-multiplexing, frequency-multiplexing or multiplexing the subcarriers or a combination thereof.

Fig. 3a shows a possible time pattern of the filtered and coded signal Sᵢ. Fig. 3b shows the associated modulated auxiliary signal which may adopt both positive and negative values. Fig. 3c represents the input signal of the electrooptical converter 26, it being discernable that in the absence of the subcarrier the constant value added to the output signal of the auxiliary modulator 30 is reduced compared with the constant value added to the output signal of the auxiliary modulator in the presence of the subcarrier.

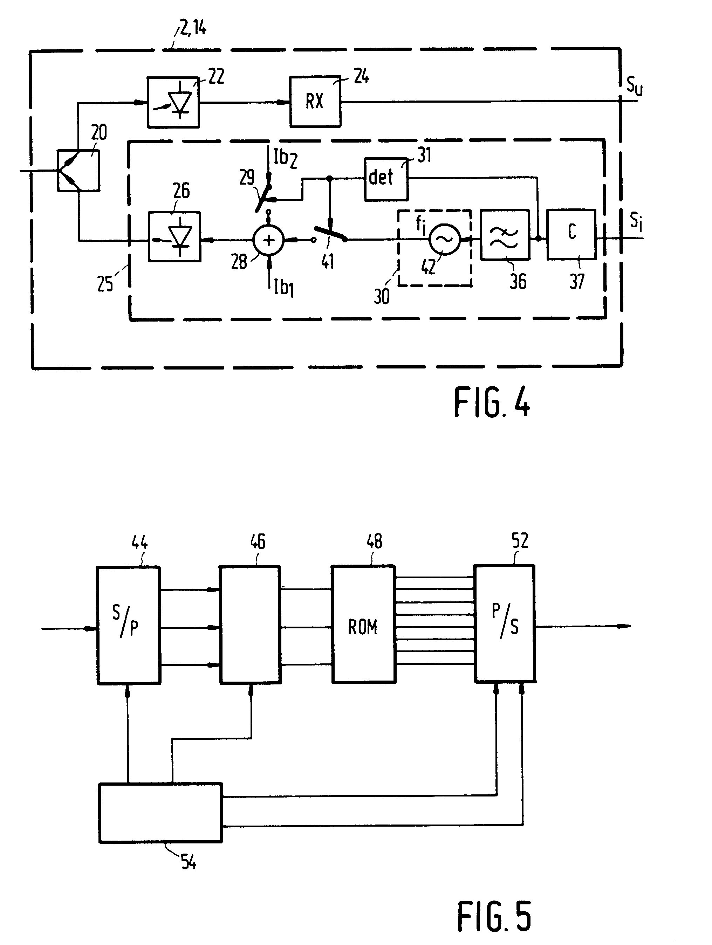

At the sub-station 2 shown in Fig. 4 the input signal Sᵢ is applied to a transmitter 25. In the transmitter 25 the source signal Sᵢ is applied to an input of an auxiliary modulator 30 *via* coding means 37 and a low-pass filter 36. The auxiliary modulator 30 comprises an oscillator 34 for generating the subcarrier having a mean frequency fᵢ, which can be frequency modulated by the input signal of the auxiliary modulator. To this end the auxiliary modulator 30 comprises a frequency controllable oscillator 42. The output of the auxiliary modulator 30 is connected to a first input of an adder circuit 28 *via* a switch 41. A constant value I_{b1} is applied to a second input of the adder circuit 28 while the third input of the adder circuit is supplied with a constant value I_{b2} *via* a switch 29. The switches 29 and 41 are controlled here by the output signal of a detector 31 which determines whether the coded signal Sᵢ contains information. The switch 29 forms the reducing means for reducing the mean amplitude of the transmit signal according to the inventive idea. The output of the adder circuit 28 is connected to an input of a return modulator, in this case being an electrooptical converter 26. The output of the electrooptical converter 26 carrying the transmit signal for its output signal is connected to a first input of an optical duplexer 20. An output of the optical duplexer 20 is connected to an optoelectrical converter 22 whose output is connected to the input of a receiver 24. On the output of the receiver 24 an output signal Sᵤ is available.

The auxiliary modulator 30 generates a frequency modulated subcarrier in response to the input signal Sᵢ. This is effected by applying a signal Sᵢ either coded or not by a coder 36 to a frequency input of a frequency controllable oscillator 42. By means of the detector 31 there is established whether the signal Sᵢ contains useful information. This may be established by counting the number of successive digital symbols having a logic "0" value and assuming that no useful information is transferred if a specific value of this number of symbols is exceeded.

If useful information is transmitted, the switches 29 and 41 are closed and a signal formed by the sum of the modulated subcarrier and a constant value I_{b1} + I_{b2} is available on the input of the electrooptical converter 26. If no useful information is transmitted, the switches 29 and 41 are open and only a signal having a constant value I_{b1} is applied to the electrooptical converter. This leads to the fact that in the absence of useful information only a small signal is transmitted by the electrooptical converter, so that the consequent interference remains limited.

It is imaginable that the residual value I_{b1} is equal to zero. Generally, this leads to a reduced modulation rate, because the optoelectrical converter needs a certain period of time to switch on again from the fully switched-off state. If this reduced modulation rate is permissible, it may be advantageous to fully switch off the optoelectrical converter when an auxiliary signal is disabled.

The coder 36 may be, for example, a pulse position coder. Such a pulse position coder converts a binary input signal which may have a logic "0" or "1" value in each symbol period into a pulse position modulated signal in which the information is coded by the position a single pulse takes up in a number of symbol periods. For example, groups of three symbols are converted into a pulse position coded signal, this coding is carried out in that for each of the eight possible combinations of the three binary symbols the pulse takes up one of eight possible disjunct positions over three symbol intervals of the input signal.

The use of pulse position coding calls forth a larger bandwidth, but also results in a shorter period of time on average in which the subcarrier, and thus the transmit signal, is enabled, so that the mutual interference by the sub-stations may be reduced considerably.

The low-pass filter 36 provides a limitation of the bandwidth of the output signal of the coder 37 so as to limit the bandwidth of the transmit signal.

The receive section of the sub-station as shown in Fig. 4 is identical with the receive section of the sub-station shown in Fig. 3 which has been explained earlier.

In the coder shown in Fig. 5 an input signal Sᵢ is applied to a serial input of a shift register 44. Three parallel outputs of the shift register 44 are connected to three inputs of a buffer 46. Three outputs of the buffer 46 are connected to three address inputs of a ROM 48. 8 data outputs of the ROM 48 are connected to 8 inputs of a shift register 52. A first output of a controller 54 is connected to a clock input of the shift register 44. A second output of the controller 54 is connected to a control input of the buffer 46. A third output of the controller 54 is connected to a control input of the shift register 52 and a fourth output of the controller 54 is connected to a clock input of the shift register 52.

In the shift register 44 successive symbols of the signal Sᵢ are clocked. For this purpose the first output of the controller 54 carries a clock signal having a clock rate corresponding to the symbol rate of the signal Sᵢ. Once three symbols have been clocked in the shift register 44, the controller 54 produces on its second output a pulse which causes the three symbols to be transferred to the buffer 46. The transferred symbols are used as an address for the ROM 48 which produces codewords on its eight outputs. If pulse position modulation is used, only one out of eight outputs of the ROM 48 is active each time. Alternatively, however, it is conceivable that a coding is used with which several outputs of the ROM 48 are active. These output symbols of the ROM 48 are transferred to the shift register 52 in response to a pulse coming from the controller 54, and then made available on the output of the shift register 52 in response to the clock signal on the fourth output of the controller 54. The rates of the clock signals applied to the shift register 44 and the shift register 52 are to have a ratio of 3 to 8.

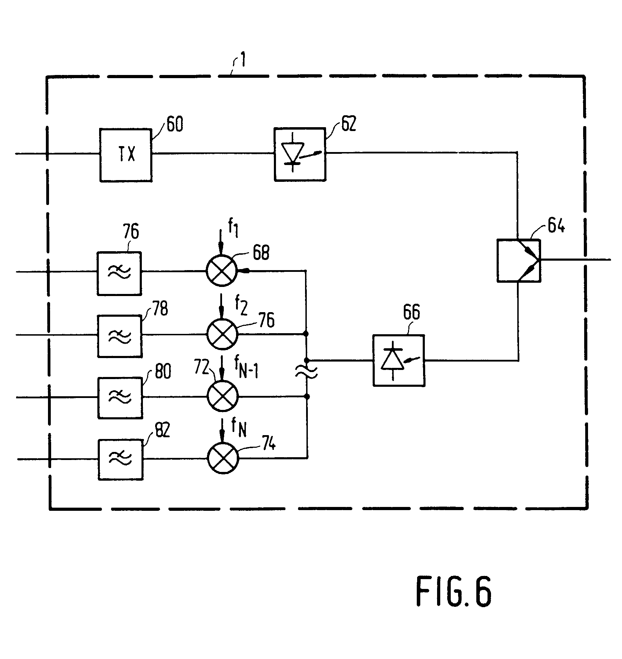

At the main station shown in Fig. 6 the signals to be transmitted are applied to a transmitter 60. The output of the transmitter 60 is connected to the input of an electrooptical converter 62 whose output is connected to an input of an optical duplexer 64.

A combined input/output of the optical duplexer is coupled to the channel. An output of the optical duplexer 64 is connected to an optoelectrical converter whose output is coupled to a first input of a plurality of mixer stages 68, 70, 72 and 74. A second input of each mixer stage is supplied with a local oscillator signal having a frequency fᵢ that differs for each mixer stage, with i = 1 ... N . The output of the mixer stage 68 is connected to an input of a low-pass filter 76; the output of the mixer stage 70 is connected to an input of a low-pass filter 78; the output of the mixer stage 72 is connected to the input of a low-pass filter 80 and the output of the mixer stage 74 is connected to the input of a low-pass filter 82.

The signals to be transmitted by the main station 1 to the sub-stations are combined to a combined signal in the transmitter 60. This may be effected, for example, by means time-multiplexing or by modulating the different signals on different subcarriers. The output signal of the transmitter 60 is converted into an optical signal by the electrooptical converter 62, which signal is fed to the channel through the optical duplexer 64.

The optical signal coming from the channel is converted into an auxiliary signal by an optoelectrical converter 66, which auxiliary signal comprises the signals of the sub-stations modulated on their own subcarrier frequencies. The frequencies of the subcarriers applied to the mixer stages 68 ... 74 correspond to the frequencies of the subcarriers used by the various sub-stations.

If the subcarriers in the sub-stations are amplitude modulated by the transmit signal, the output of each mixer stage presents a demodulated signal whose subcarrier frequency corresponds to the subcarrier in a certain sub-station. By letting the low-pass filters 76 ... 82 remove all further frequency components that exceed the maximum frequency from the data signals transmitted by the sub-stations, the output of each low-pass filter carries a signal coming from one specific sub-station.

## Claims

1. Telecommunication network comprising a main station (1) coupled to a plurality of sub-stations (2 · · · · 11) over a channel (12), said (2 · · · · 11) sub-stations comprising an auxiliary modulator (30) for generating an auxiliary signal by modulation of an input signal on a subcarrier having a frequency that is different for at least two sub-stations (2 · · · · 11), and a modulator (26) for deriving a modulated transmit signal from the auxiliary signal, characterized in that the sub-stations (2 · · · · 11) comprise reducing means (28, 29) for reducing the mean amplitude of the transmit signal when the amplitude of the auxiliary signal is reduced.

2. Telecommunication network as claimed in Claim 1, characterized in that the modulator comprises an electrooptical converter (26).

3. Telecommunication network as claimed in Claim 1, characterized in that the sub-stations (2 · · · · 11) comprise coding means (37) for converting the input signal into a coded signal which compared with the input signal is active for a shorter fraction of time.

4. Telecommunication network as claimed in Claim 3, characterized in that the coded signal comprises a pulse position modulated signal.

5. Sub-station (2) comprising an auxiliary modulator (30) for generating an auxiliary signal by modulating an input signal on a subcarrier and including a modulator (26) for deriving a modulated transmit signal from the auxiliary signal, characterized in that the sub-station (2) comprises reducing means (28,29) for reducing the mean amplitude of the transmit signal when the amplitude of the auxiliary signal is reduced.

6. Sub-station (2) as claimed in Claim 5, characterized in that the modulator (26) comprises an electrooptical (26) converter.

7. Sub-station (2) as claimed in Claim 5, characterized in that the sub-stations comprise coding means for converting the input signal into a coded signal which, compared with the input signal, is active for a shorter fraction of time.

8. Sub-station (2) as claimed in Claim 7, characterized in that the coded signal comprises a pulse position modulated signal.

## Patentansprüche

1. Telekommunikationsnetzwerk mit einer Hauptstelle (1), die über einen Kanal (12) mit einer Anzahl Nebenstellen (2.....11) gekoppelt ist, wobei diese Nebenstellen (2 11) mit einem Hilfsmodulator (30) versehen sind zum Erzeugen eines Hilfssignals durch Modulation eines Eingangssignals auf einem Hilfsträger mit einer Frequenz, die für wenigstens zwei Nebenstellen (2.....11) verschieden ist, und mit einem Modulator (26) zum Herleiten eines modulierten Sendesignals aus dem Hilfssignal, dadurch gekennzeichnet, daß die Nebenstellen (2. . . . 11) mit Reduktionsmitteln (28, 29) versehen sind zum Reduzieren der mittleren Amplitude des Sendesignals bei einer Verringerung der Amplitude des Hilfssignals.

2. Telekommunikationsnetzwerk nach Anspruch 1, dadurch gekennzeichnet, daß der Modulator einen elektrooptischen Wandler (26) aufweist.

3. Telekommunikationsnetzwerk nach Anspruch 1, dadurch gekennzeichnet, daß die Nebenstellen (2 . . . 11) Codierungsmittel (37) aufweisen zum Umwandeln des Eingangssignals in ein codiertes Signal, das im Vergleich zu dem Eingangssignal während eines kürzeren Bruchteils der Zeit aktiv ist.

4. Telekommunikationsnetzwerk nach Anspruch 3, dadurch gekennzeichnet, daß das codierte Signal ein pulspositionsmoduliertes Signal umfaßt.

5. Nebenstelle (2) mit einem Hilfsmodulator (30) zum Erzeugen eines Hilfssignals durch Modulation eines Eingangssignals auf einem Hilfsträger und mit einem Modulator (26) zum Herleiten eines modulierten übertragenen Signals aus dem Hilfssignal, dadurch gekennzeichnet, daß die Nebenstelle (2) Reduktionsmittel (28, 29) aufweist zum Reduzieren der mittleren Amplitude des übertragenen Signals, wenn die Amplitude des Hilfssignals reduziert ist.

6. Nebenstelle (2) nach Anspruch 5, dadurch gekennzeichnet, daß der Modulator (26) einen elektrooptischen Wandler (26) aufweist.

7. Nebenstelle (2) nach Anspruch 5, dadurch gekennzeichnet, daß die Nebenstellen Codierungsmittel aufweisen zum Umwandeln des Eingangssignals in ein codiertes Signal, das im Vergleich zu dem Eingangssignal während eines kürzeren Bruchteils der Zeit aktiv ist.

8. Nebenstelle (2) nach Anspruch 7, dadurch gekennzeichnet, daß das codierte Signal ein pulspositionsmoduliertes Signal umfaßt.

## Revendications

1. Réseau de télécommunications comprenant une station principale (1) couplée à une pluralité de sous-stations (2 ... 11) par une voie (12), lesdites sous-stations (2...11) comprenant un modulateur auxiliaire (30) pour produire un signal auxiliaire par la modulation d'un signal d'entrée sur une sous-porteuse ayant une fréquence qui est différente pour au moins deux sous-stations (2 ... 11), et un modulateur (26) pour dériver un signal de transmission modulé du signal auxiliaire, caractérisé en ce que les sous-stations (2 ... 11) comprennent des moyens de réduction (28, 29) pour réduire l'amplitude moyenne du signal de transmission lorsque l'amplitude du signal auxiliaire est réduite.

2. Réseau de télécommunications suivant la revendication 1, caractérisé en ce que le modulateur comprend un convertisseur électro-optique (26).

3. Réseau de télécommunications suivant la revendication 1, caractérisé en ce que les sous-stations (2 .... 11) comprennent des moyens des codage (37) pour convertir le signal d'entrée en un signal codé qui, comparé au signal d'entrée, est actif pendant une fraction de temps plus courte.

4. Réseau de télécommunications suivant la revendication 3, caractérisé en ce que le signal codé comprend un signal modulé de position d'impulsion.

5. Sous-station (2) comprenant un modulateur auxiliaire (30) pour produire un signal auxiliaire en modulant un signal d'entrée sur une sous-porteuse et en incluant un modulateur (26) pour dériver un signal de transmission modulé du signal auxiliaire, caractérisée en ce que la sous-station (2) comprend des moyens de réduction (28, 29) pour réduire l'amplitude moyenne du signal de transmission lorsque l'amplitude du signal auxiliaire est réduite.

6. Sous-station (2) suivant la revendication 5, caractérisé en ce que le modulateur (26) comprend un convertisseur électro-optique (26).

7. Sous-station (2) suivant la revendication 5, caractérisée en ce que les sous-stations comprennent des moyens de codage pour convertir le signal d'entrée en un signal codé qui, comparé au signal d'entrée, est actif pendant une fraction de temps plus courte.

8. Sous-station (2) suivant la revendication 7, caractérisée en ce que le signal codé comprend un signal modulé de position d'impulsion.
